# FASCICULE DE BREVET EUROPEEN

(11) **EP 0 534 838 B1**
(45) Date de publication et mention de la délivrance du brevet: **30.08.1995**
(21) Numéro de dépôt: 92402599.2
(22) Date de dépôt: 22.09.1992
(51) Int. Cl.: B29C 49/56, B29C 33/26

(54) **Dispositif d'ouverture et de fermeture pour moule de soufflage et d'étirage-soufflage du type portefeuille**
Vorrichtung zum Öffnen und Schliessen einer geteilten Form
Opening and closing device for a split-mould for blow moulding

(30) Priorité: 24.09.1991 FR 9111749
(43) Date de publication de la demande: 31.03.1993
(73) Titulaire: SIDEL, F- 76053 Le Havre Cedex (FR)
(72) Inventeur: Doudement, Gérard, F-76600 Le Havre (FR)
(74) Mandataire: Gorree, Jean-Michel

(56) Documents cités:
- FR-A- 2 646 802
- FR-A- 2 653 058
- GB-A- 1 230 090
- GB-A- 2 225 274

## Description

La présente invention concerne des perfectionnements apportés aux dispositifs d'ouverture et de fermeture pour moule de soufflage ou d'étirage-soufflage du type portefeuilles utilisable notamment pour la fabrication de récipients en matière plastique tels que bouteilles, flacons ou analogues, ledit moule comportant deux demi-moules appliqués l'un contre l'autre en position de fermeture du moule, dispositif comprenant :
- un axe fixe de pivotement mutuel supportant à libre rotation les deux demi-moules,
- deux bras d'actionnement reliés à libre rotation, par une de leurs extrémités, aux deux demi-moules en des points de ceux-ci situés de part et d'autre du susdit axe de pivotement mutuel,
- des moyens à came comprenant au moins un galet monté fou sur un arbre porte-galet sensiblement parallèle au susdit axe de pivotement et au moins une came de guidage pour ce galet dont le profil en long est apte à provoquer un déplacement du galet selon une direction sensiblement perpendiculaire au susdit axe de pivotement et intersectant celui-ci,
- et des moyens de liaison pour accoupler ledit galet aux autres extrémités des deux susdits bras d'actionnement.

L'invention s'applique à des agencements de moulage dans lesquels les demi-moules sont directement montés à rotation sur l'axe de pivotement mutuel aussi bien qu'à des agencements de moulage, plus fréquemment utilisés en raison des facilités d'emploi qu'ils procurent, dans lesquels les demi-moules sont solidarisés de façon démontable à des supports respectifs qui sont eux-mêmes montés à rotation sur l'axe de pivotement mutuel. Pour simplifier les explications, on emploiera ci-après uniquement le terme "demi-moule", étant entendu qu'il s'agira du demi-moule seul ou du demi-moule et son support selon l'agencement dans lequel l'invention sera mise en oeuvre.

Dans les installations de moulage telles que celles destinées à la fabrication de récipients en matière plastique, qui incluent par exemple plusieurs moules associés sur un plateau tournant, les différents mouvements nécessaires au fonctionnement des moules sont commandés par des systèmes à base de cames et de mécanismes de renvoi de mouvements ; c'est le cas en particulier pour la commande de l'ouverture et de la fermeture des moules.

On connaît de nombreux dispositifs d'ouverture et de fermeture de moules, en particulier ceux décrits dans les documents FR- 2 653 058 et FR - 2 646 802 au nom de la Demanderesse qui dans leur principe donnent toute satisfaction.

La présente invention a essentiellement pour but de proposer un dispositif perfectionné d'ouverture et de fermeture de moule qui, tout en conservant les avantages des dispositifs antérieurs et notamment ceux du dispositif du document FR- 2 653 058, présente un encombrement moindre et une structure simplifiée afin non seulement d'en réduire le coût, mais aussi de permettre l'exploitation de moules de capacités supérieures sans accroître les dimensions du plateau qui les supporte ; qui autorise une simplification des réglages mécaniques pour faciliter l'exploitation et recueillir un gain en fiabilité ; qui permette une simplification des moyens de sécurité ; et qui présente moins de pièces glissantes et donc moins de pièces sujettes à usure, d'où un entretien réduit.

A ces fins, un dispositif d'ouverture et de fermeture de moule agencé conformément à l'invention se caractérise essentiellement en ce que lesdite moyens de liaison comprennent deux bielles superposées et solidaires l'une de l'autre par des moyens d'accouplement, les deux biellettes supportant, à une de leurs extrémités, respectivement l'arbre porte-galet et un arbre d'accouplement accouplant les autres extrémités des bras d'actionnement, ces biellettes étant montées à libre rotation, à leur autre extrémité, sur un axe fixe sensiblement parallèle à l'axe de pivotement des demi-moules, lesdites biellettes s'étendant approximativement transversalement au plan contenant l'axe de pivotement des demi-moules et l'arbre d'accouplement des bras d'actionnement. Dans ce cas, on peut faire en sorte que l'arbre porte-galet et l'arbre d'accouplement des bras d'actionnement soient sensiblement coaxiaux.

Dans un tel agencement, il est possible de faire en sorte que les moyens d'accouplement soient des moyens d'accouplement de sécurité qui sont aptes, au-delà d'un seuil prédéterminé d'effort, à libérer l'une de l'autre les deux biellettes qui deviennent alors susceptibles d'un mouvement de rotation autour de leur axe commun les écartant l'une de l'autre ; les moyens d'accouplement peuvent alors comprendre en outre des moyens de butée aptes à limiter l'écartement mutuel des deux biellettes libérées en cas de surcharge.

Il est également possible de perfectionner ce dispositif en prévoyant que les moyens de liaison comportent en outre des moyens d'entretoisement interposés entre les deux biellettes de manière que l'écartement entre les deux biellettes suivant une direction parallèle à l'axe fixe soit maintenu sensiblement constant.

Une structure simple peut toutefois être obtenue en faisant en sorte que les moyens de butée et les moyens d'entretoisement soient combinés et constitués par une lumière oblongue incurvée pratiquée dans l'une des biellettes et par un doigt épaulé engagé à travers ladite lumière et solidaire de l'autre biellette.

Ainsi, un dispositif d'ouverture et de fermeture de moule agencé conformément à l'invention conserve le fonctionnement fondamental intéressant des dispositifs antérieurs, et notamment celui du dispositif du document FR-2 653 058, mais il se révèle en outre beaucoup plus intéressant en raison d'une structure plus simple et moins encombrante, sans pièces coulissantes ; il ne comporte aucun guidage en translation et ne nécessite donc aucun moyen de réglage de jeu. Il est donc d'un fonctionnement plus fiable, nécessite un entretien plus réduit et, d'une façon globale, ses coûts de fabrication et d'entretien sont moindres.

L'invention sera mieux comprise à la lecture de la description détaillée qui suit d'un mode de réalisation préféré donné uniquement à titre d'exemple purement illustratif. Dans cette description, on se réfère aux dessins annexés sur lesquels :
- la figure 1 est une vue partielle, en coupe suivant la ligne I-I de la figure 2, d'une machine de moulage équipée d'un dispositif d'ouverture et de fermeture de moule conforme à l'invention ;
- la figure 2 est une vue de dessus montrant deux moules de la machine de la figure 1 respectivement dans deux positions fonctionnelles différentes ; et
- la figure 3 est une vue en coupe selon la ligne III-III de la figure 1.

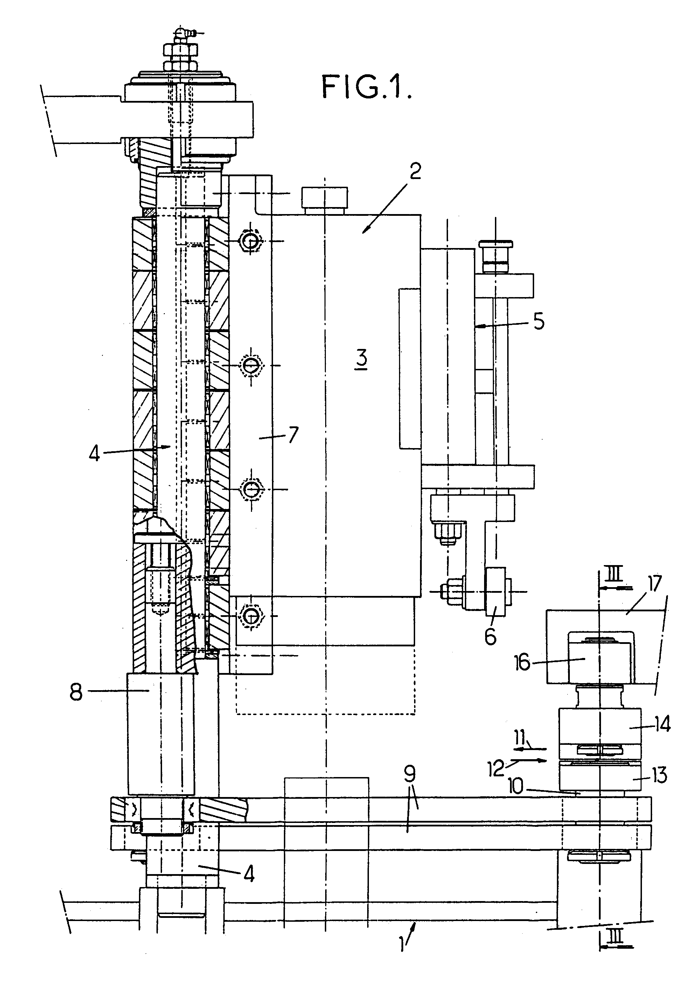

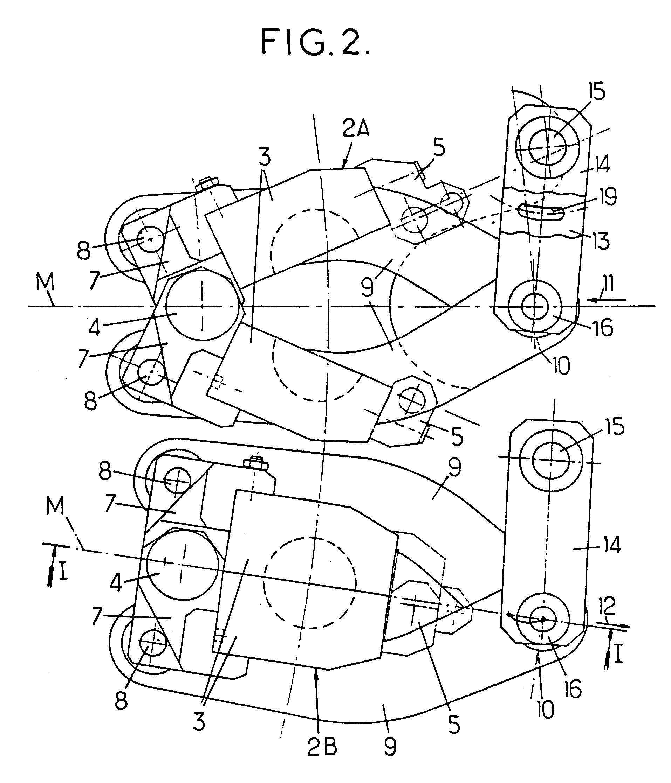

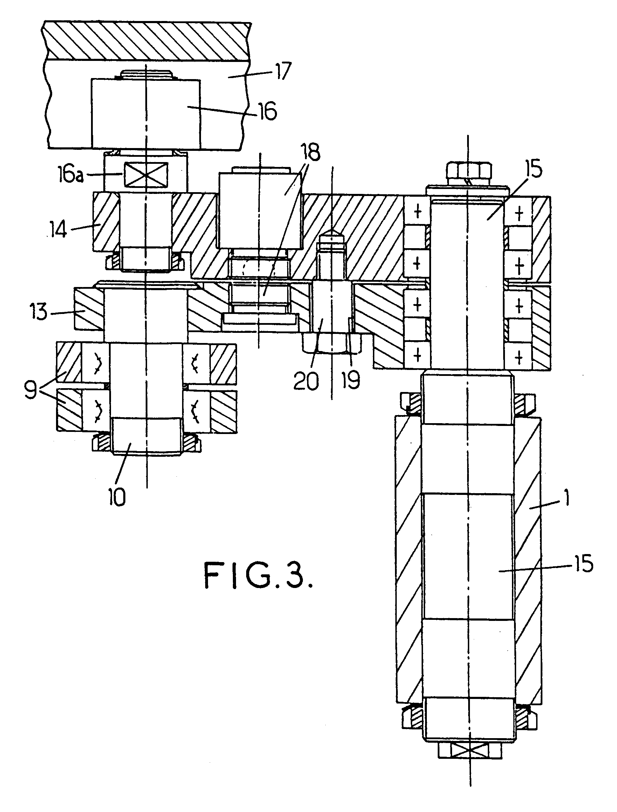

L'installation de moulage qui est représentée de façon partielle sur les figures 1 à 3 (seules les parties nécessaires à la compréhension de l'invention étant montrées) est une installation tournante comportant un plateau 1 qui tourne autour d'un arbre vertical d'entraînement (non visible) et qui supporte plusieurs moules 2 répartis angulairement le long de son pourtour (sur la figure 2, deux moules consécutifs 2A et 2B sont représentés). Mais, bien entendu, l'invention n'est pas limitée à ce type d'installation à plateau tournant, laquelle est prise ici en considération uniquement à titre d'exemple.

Chaque moule 2 est un moule de soufflage ou d'étirage-soufflage du type porte-feuilles utilisable notamment pour la fabrication de récipients en matière plastique (par exemple en polyéthylènetérephtalate ou PET) tels que des bouteilles, des flacons ou analogues. Chaque moule 2 est constitué de deux demi-moules 3 raccordés l'un à l'autre, sur leur arrière, par un axe vertical du pivotement 4 qui constitue également l'organe de montage sur le plateau 1. Sur le devant (c'est-à-dire vers la périphérie du plateau), les moules 2 sont munis de moyens de verrouillage appropriés, désignés d'une façon générale par la référence 5, qui assurent le verrouillage des deux demi-moules 3 en position de fermeture. L'actionnement de ces moyens de verrouillage 5 est commandé par un galet 6 qui en est solidaire et qui est apte à coopérer avec des cames fixes de l'installation, respectivement une came de déverrouillage et une came de verrouillage.

L'invention propose un dispositif de conception simple pour l'ouverture et la fermeture de chaque moule.

Dans l'exemple considéré, chaque demi-moule est monté de façon amovible (par vissage par exemple) sur une structure de support en forme d'équerre 7 et ce sont ces deux supports en équerre 7 qui sont articulés en rotation sur l'axe 4. Ces deux supports 7 sont munis, dans leur zone d'angle respective et donc à distance de l'axe 4 de pivotement mutuel, de deux axes respectifs 8 qui sont solidaires en rotation desdits supports. Ces deux axes 8 font saillie sous les supports 7 et supportent, à libre rotation, respectivement les extrémités libres de deux bras d'actionnement 9 situés à des niveaux différents.

Les deux bras d'actionnement 9 s'étendent approximativement parallèlement l'un à l'autre en direction de la périphérie du plateau et sont recourbés l'un vers l'autre en avant du moule 2 avec leurs extrémités correspondantes articulées à libre rotation sur un arbre d'accouplement commun 10 sensiblement vertical.

Ainsi, un déplacement radial (considéré par rapport au plateau 1) de l'arbre d'accouplement 10 permet, par l'intermédiaire des bras d'actionnement 9, de commander l'ouverture ou la fermeture de chaque moule. A la figure 2, le moule 2A (en haut sur la figure) est ouvert sous l'action d'un déplacement radial vers l'intérieur (flèche 11) de l'arbre d'accouplement 10 ; le moule 2B (en bas sur la figure) est fermé sous l'action d'un déplacement radial vers l'extérieur (flèche 12) de l'arbre d'accouplement 10.

Pour provoquer ce déplacement de l'arbre 10, celui-ci est associé aux moyens suivants.

Deux biellettes superposées 13 et 14 s'étendent, à partir de l'arbre 10, dans une direction approximativement perpendiculaire au plan M qui joint les axes des arbres 4 et 10 et qui coïncide avec le plan de joint des deux demi-moules 3 du moule 2.

La biellette inférieure 13 a une extrémité articulée à libre rotation sur l'arbre d'accouplement 10 et son autre extrémité est articulée à libre rotation sur un axe de support 15, fixe et supporté par le plateau 1.

La biellette supérieure 14 a une extrémité articulée à libre rotation sur l'axe de support 15 et son autre extrémité supporte un galet fou 16 d'axe vertical 16a sensiblement coaxial à l'arbre d'accouplement 10 dans la position normale de fonctionnement représentée sur les figures 1 à 3. Le galet 16 est apte à coopérer avec une came 17, en forme de gouttière, qui possède une configuration longitudinale appropriée pour provoquer le déplacement souhaité des demi-moules.

Les deux biellettes 13 et 14 sont en outre réunies et maintenues en position superposée par des moyens d'accouplement de sécurité 18, par exemple du type à bille prisonnière, qui sont aptes, au-delà d'un seuil prédéterminé d'effort, à libérer l'une de l'autre les deux biellettes 13 et 14, lesquelles deviennent alors susceptibles d'un mouvement de rotation autour de l'axe de support 15 en s'écartant l'une de l'autre. On obtient ainsi, en cas de surcharge ou de blocage, un désaccouplement provisoire du plateau 1 et de la came 17 reliés l'un à l'autre par l'intermédiaire des biellettes 13, 14, ce qui évite un endommagement grave de l'installation et donne un court délai pour provoquer un arrêt d'urgence de l'installation.

Par ailleurs, pour simultanément maintenir les deux biellettes 13, 14 superposées avec un écartement constant en fonctionnement normal et limiter leur écartement angulaire mutuel en cas de surcharge, la biellette inférieure 13 est munie d'une lumière allongée curviligne 19 centrée sur l'axe 15 et une vis épaulée 20 est engagée à travers cette lumière et vissée dans la biellette supérieure 14.

Ainsi, les moyens agencés conformément à l'invention, tout en conservant la même efficacité que les moyens du même type actuellement connus, sont d'une structure plus simple et moins onéreuse et sont moins sujets à usure.

On notera en particulier que le mécanisme qui vient d'être décrit ne comporte aucun guidage en translation et ne nécessite donc aucun dispositif de réglage de jeu. Ce mécanisme est très compact et, étant disposé vers la périphérie du plateau, il permet de disposer d'une place libre accrue pour loger les moules, lesquels peuvent alors être plus grands si nécessaire.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes dans le cadre défini par les revendications.

## Revendications

1. Dispositif d'ouverture et de fermeture pour moule de soufflage ou d'étirage-soufflage du type portefeuilles utilisable notamment pour la fabrication de récipients en matière plastique tels que bouteilles, flacons ou analogues, ledit moule comportant deux demi-moules appliqués l'un contre l'autre en position de fermeture du moule, dispositif comprenant :
- un axe fixe de pivotement mutuel (4) supportant à libre rotation les deux demi-moules (3),
- deux bras d'actionnement (9) reliés à libre rotation, par une de leurs extrémités, aux deux demi-moules (3) en des points (8) de ceux-ci situés de part et d'autre du susdit axe de pivotement mutuel (4),
- des moyens à came comprenant au moins un galet (16) monté fou sur un arbre porte-galet sensiblement parallèle au susdit axe de pivotement (4) et au moins une came de guidage (17) pour ce galet dont le profil en long est apte à provoquer un déplacement du galet selon une direction sensiblement perpendiculaire au susdit axe de pivotement et intersectant celui-ci,
- et des moyens de liaison pour accoupler ledit galet aux autres extrémités des deux susdits bras d'actionnement,
caractérisé en ce que les moyens de liaison comprennent deux biellettes (13, 14) superposées et solidaires l'une de l'autre par des moyens d'accouplement (18), les deux biellettes (14, 13) supportant, à une de leurs extrémités, respectivement l'arbre porte-galet (16a) et un arbre d'accouplement (10) accouplant les autres extrémités des bras d'actionnement (9), ces biellettes étant montées à libre rotation , à leur autre extrémité, sur un axe fixe (15) sensiblement parallèle à l'axe de pivotement des demi-moules, lesdites biellettes s'étendant approximativement transversalement au plan (M) contenant l'axe de pivotement des demi-moules et l'arbre d'accouplement des bras d'actionnement.

2. Dispositif selon la revendication 1, caractérisé en ce que l'arbre porte-galet (16a) et l'arbre (10) d'accouplement des bras d'actionnement (9) sont sensiblement coaxiaux.

3. Dispositif selon la revendication 1 ou 2, caractérisé en ce que les moyens d'accouplement sont des moyens d'accouplement de sécurité qui sont aptes, au-delà d'un seuil prédéterminé d'effort, à libérer l'une de l'autre les deux biellettes (13, 14) qui sont alors susceptibles d'un mouvement de rotation autour de leur axe commun (15) les écartant l'une de l'autre.

4. Dispositif selon la revendication 3, caractérisé en ce que les moyens d'accouplement comprennent en outre des moyens de butée (19, 20) aptes à limiter l'écartement mutuel des deux biellettes (13, 14) en cas de surcharge.

5. Dispositif selon l'une quelconque des revendications 1 à 4, caractérisé en ce que les moyens d'accouplement comportent en outre des moyens d'entretoisement (19, 20) interposés entre les deux biellettes (13, 14) de manière que l'écartement entre les deux biellettes suivant une direction parallèle à l'axe fixe (15) soit maintenu sensiblement constant.

6. Dispositif selon les revendications 4 et 5, caractérisé en ce que les moyens de butée et les moyens d'entretoisement sont combinés et constitués par une lumière oblongue incurvée (19) pratiquée dans l'une des biellettes (13) et par un doigt épaulé (20) engagé à travers ladite lumière (19) et solidaire de l'autre biellette (14).

## Claims

1. An opening and closing device for a portfolio-type blowing or stretching-blowing mold used for the manufacture of plastic containers such as bottles, flasks or likes, said mold comprising two half-molds pressed against each other in the closed position of the mold, said device comprising :
a) a stationary common swivel pin (4) supporting the two half-molds (3) in free rotation,
b) two control arms (9) connected in free rotation at one of their ends to the two half-molds (3) at points (8) thereof located on opposite sides of the swivel pin (4),
c) cam means comprising at least one follower roller (16) loosely mounted on a roller-support shaft substantially parallel to said swivel pin (4), and at least one guide cam (17) for causing the roller to move in a direction substantially perpendicular to said swivel pin and which intersects said pin,
d) and connection means for joining said roller to the other ends of said two control arms,
characterized in that said connection means comprises two superposed connection rods (13, 14) joined together by coupling means (18), said two connection rods (13, 14) supporting, at one of their ends, respectively the roller-support shaft (16a) and a coupling shaft (10) which joins the other ends of the control arms (9), said rods being mounted so as to rotate freely, at their other ends, on a fixed pin (15) substantially parallel to the swivel pin supporting the half-molds, said connection rods extending approximately transversely to a plane (M) containing the swivel pin of the half-molds and the coupling shaft of the control arms.

2. A device according to claim 1, characterized in that said roller-support shaft (16a) and the control arms coupling shaft (10) are substantially coaxial.

3. A device according to claim 1 or 2, characterized in that said coupling means are safety coupling means which can, beyond a predetermined stress threshold, release the two connection rods (13, 14) from each other, which can then rotate around the common pin (15) away from each other.

4. A device according to claim 3, characterized in that the coupling means further comprises stop means (19, 20) for limiting a reciprocal separation of the two connection rods (13, 14) in the event of an excess load.

5. A device according to anyone of claim 1 to 4, characterized in that the stop means further embodies bracing means (19, 20) interposed between the two connection rods (13, 14) such that the distance between the two rods along a direction parallel to the fixed axis (15) is kept substantially constant.

6. A device according to claims 4 and 5, characterized in that the stop means and the bracing means are combined and are formed by a curved oblong slot (19) provided in one of the connection rods (13) and by a shouldered screw (20) inserted through said slot (19) and connected to the other connection rod (14).

## Patentansprüche

1. Vorrichtung zum Öffnen und Schließen einer Blasform oder Streckblasform des aufklappbaren Typs, die insbesondere für die Herstellung von Behältern aus Kunststoffmaterial wie Flaschen, Flakons oder ähnlichen, verwendbar ist, wobei die Form zwei Halbformen aufweist, die in der geschlossenen Stellung der Form aneinandergesetzt sind, wobei die Vorrichtung folgendes aufweist:
- eine feste Achse zum gegenseitigen Verschwenken (4), die die zwei Halbformen (3) frei drehbar trägt;
- zwei Betätigungsarme (9), die freidrehend mit einem ihrer Enden an den zwei Halbformen (3) an Punkten (8) befestigt sind, die auf beiden Seiten der obengenannten Achse zum gegenseitigen Verschwenken (4) gelegen sind;
- eine Nockeneinrichtung mit mindestens einer Rolle (16), die an einer Rollenträgerwelle lose angebracht ist, die im wesentlichen parallel zur obengenannten Schwenkachse (4) liegt, und mindestens eine Führungsnocke (17) für diese Rolle, deren Längsprofil eine Verschiebung der Rolle in eine Richtung hervorrufen kann, die im wesentlichen senkrecht zur oben genannten Schwenkachse liegt und diese schneidet,
- und eine Verbindungseinrichtung zum Koppeln der Rolle an die anderen Enden der zwei oben genannten Betätigungsarme,
dadurch gekennzeichnet, daß die Verbindungseinrichtung zwei übereinanderliegende und über eine Kopplungseinrichtung (18) miteinander verbundene Schwingarme (13,14) aufweist, wobei die zwei Schwingarme an einem ihrer Enden die Rollenträgerwelle (16a) bzw. eine an die anderen Enden der Betätigungsarme (9) angekoppelte Kupplungswelle (10) tragen, wobei die Schwingarme freidrehend an ihrem anderen Ende an einer festen Achse (15) angebracht sind, die im wesentlichen parallel zur Schwenkachse der Halbformen ist, wobei die Schwingarme sich annähernd transversal zur Ebene (M) erstrecken, in der die Schwenkachse der Halbformen und die Kupplungswelle der Betätigungsarme liegen.

2. Vorrichtung nach Anspruch 1, dadurch gekennzeichnet, daß die Rollenträgerwelle (16a) und die Kupplungswelle (10) der Betätigungsarme (9) im wesentlichen koaxial sind.

3. Vorrichtung nach Anspruch 1 oder 2, dadurch gekennzeichnet, daß die Kupplungseinrichtung eine Sicherheitskupplungseinrichtung ist, die jenseits einer vorgegebenen Belastungsschwelle die zwei Schwingarme (13,14) voneinander trennen kann, die dann zu einer Drehbewegung um ihre gemeinsame Achse (15) fähig sind, wobei sie sich voneinander entfernen.

4. Vorrichtung nach Anspruch 3, dadurch gekennzeichnet, daß die Kupplungseinrichtung ferner Anschlageinrichtungen (19,20) aufweist, um im Falle einer Überlastung das Entfernen der beiden Schwingarme (13,14) voneinander zu begrenzen.

5. Vorrichtung nach einem der Ansprüche 1 bis 4, dadurch gekennzeichnet, daß die Kupplungseinrichtung ferner Verankerungseinrichtungen (19,20) aufweist, die zwischen den zwei Schwingarmen (13,14) angeordnet sind, so daß das Entfernen der beiden Schwingarme voneinander längs einer zur festen Achse (15) parallelen Richtung im wesentlichen konstant gehalten wird.

6. Vorrichtung nach Anspruch 4 und 5, dadurch gekennzeichnet, daß die Anschlageinrichtungen und Verankerungseinrichtungen kombiniert sind und aus einem gebogenen Langloch (19), das in einem der Schwingarme (13) ausgebildet ist, und einem vorstehenden Stift (20) bestehen, der durch das Loch (19) hindurch ragt und mit dem anderen Schwingarm (14) verbunden ist.
